# EUROPEAN PATENT SPECIFICATION

(11) **EP 1 902 106 B1**
(45) Date of publication and mention of the grant of the patent: **20.08.2014**
(21) Application number: 05771692.0
(22) Date of filing: 08.07.2005
(51) Int. Cl.: C09D 5/08, C09D 163/00, C08G 59/06, C08G 59/10, C08L 63/00

(54) **PRIMER COMPOSITIONS FOR ADHESIVE BONDING SYSTEMS**
GRUNDIERMITTEL FÜR VERKLEBUNGEN
COMPOSITIONS PRIMAIRES POUR SYSTEMES DE FIXATION PAR COLLAGE

(43) Date of publication of application: 26.03.2008
(73) Proprietor: Henkel Corporation, Rocky Hill, Connecticut 06067 (US); Henkel AG & Co. KGaA, 40589 Düsseldorf (DE)
(72) Inventor: ROTH, Marcel, 40589 Düsseldorf (DE); SCHMIDT-FREYTAG, Ulrike, 52072 Aachen (DE); REGULSKI, Thomas, Discovery Bay, CA 94514 (US); FOLL, Jurgen, 40472 Düsseldorf (DE); WUCHERPFENNIG, Sven, 41542 Dormagen (DE); GNAD, Angela, 40667 Meerbusch (DE); HUVER, Thomas, 40625 Düsseldorf (DE)
(74) Representative: Kuhnert, Oliver
(86) International application number: PCT/US2005/024300
(87) International publication number: WO 2007/008199

(56) References cited:
- US-A- 5 576 061
- US-A- 5 859 095
- US-A1- 2003 031 799

## Description

### BACKGROUND OF THE INVENTION

### Field of the Invention

The present invention relates to primer compositions for adhesive bonding systems and for coatings, especially to inhibit surface corrosion. The primer compositions may be in the form of sprayable aqueous dispersions, which are shelf stable at ambient temperatures for up to three months under ambient temperature conditions, and demonstrate a cure profile of 45 to 120 minutes within the temperature range of 220°F to 350°F within 90 minutes of application. Significantly, the inventive primer compositions are preferably substantially free of chromate.

### Brief Description of Related Technology

When manufacturing composite structures, it is often necessary to bond together certain of the structures used to make the composite with adhesives, generally structural film adhesives, or to laminate one or more reinforcement layers to the underlying structure. Conventionally, adhesive strength is optimized when the surfaces of the underlying structure has been cleaned to remove environmental contaminates, such as dirt, oxidation, and other debris immediately prior to bonding. With many manufacturing processes, however, the cleaning and bonding operations are often staged so that they are separated significantly in time, during which time the metal surface may become recontaminated, thus lessening the adhesive strength of the bond to be formed.

To alleviate this concern, the cleaned surface may be primed with a primer. Unfortunately, the primer may not always permit the same degree of adhesion to the surface(s), whether constructed of metal or composite adherends, thus resulting in adhesive joints that may not be as strong as if they had been freshly prepared. In the past, primers have often been prepared from one or two component thermosetting resins, typically diluted with organic solvents to allow for spray application. Liquid epoxy esters were proposed for use in coatings over forty years ago, in compositions containing either water or the epoxy ester itself as a carrier vehicle, together with polyvinylacetate, polyacrylic, or poly(butadiene/styrene).

One such example of these organic solvent based primers includes U.S. Patent No. 4,352,899 (Tada), in which is described a coating composition for metal substrates of an epoxy resin, an organic phosphorus compound, zinc powder, and a magnesium compound dispersed in a liquid medium. A portion of the zinc powder may be replaced by a solid electroconductive material. These compositions are applied in organic solvents, and the compositions may contain various pigments including chromate pigments.

In an effort to address environmental and regulatory concerns over the use of organic solvents, two component primer systems have been designed and developed in which one component is an epoxy resin dispersion in water, either with a reduced volume of solvent or not at all, together with various corrosion inhibitors, mainly chromate based ones, and the second component is a reducible amine catalyst in water.

For instance, U.S. Patent Nos. 5,416,090, 5,576,061, and 5,641,818, each disclose an aqueous, essentially VOC-free adhesive epoxy primer for promoting the bonding of a metal adherend to another adherend without reported loss of physical properties, in a storage stable environment, and exhibiting solvent resistance. The primer disclosed by these patents is prepared by dispersing one or more solid epoxy resins and a solid curing agent into water such that 100% of the solid particles of epoxy resin and curing agent have a size of less than 30 µm.

Further environmental and regulatory issues have developed recently over the use of chromates, and in particular the use of chromates as corrosion inhibitors. In the past, various types of liquid coating compositions have been applied to metallic substrates and baked thereon in order to protect the substrates against corrosion. Certain of such coatings are applied in conventional metal coil coating processes, and they must be sufficiently adherent and flexible to resist cracking, chipping and peeling. One process which has been utilized for improving the corrosion-resistance of various metal substrates generally involves the application of two coatings. The first coating is comprised of a material, such as xanthan gum, as a carrier for the other ingredients of the coating which include a chromium compound such as chromium trioxide and zinc dust. On baking, the xanthan gum contained in the coating becomes water-insoluble. Over this baked coating is applied a second coating which comprises a zinc rich resin. U.S. Patent No. 4,026,710 (Kennedy) describes such two-step procedures for improving the corrosion-resistance of metal.

U.S. Patent No. 3,713,904 (Bernath) describes compositions for producing corrosion-resistant and protective coatings on aluminum and aluminum alloys, which are based on an organic resin, an inorganic hexavalent chromium compound, an oxidizable component, phosphoric acid and strontium chromate. On mixing, the strontium chromate and oxidizable component react to reduce the hexavalent chromium to trivalent chromium. The mixture is applied to the substrate, which is then heated to oxidize a portion of trivalent chromium to hexavalent chromium resulting in a strongly adherent organic resin coating.

And U.S. Patent No. 5,859,095 (Moyle) claims an aqueous composition of a water-dispersible or emulsifiable epoxy resin together chromium trioxide, water, phosphoric acid and a polytetrafluoroethylene lubricant.

One approach to the elimination of chromate in corrosion inhibitor packages involved the use of zinc. Zinc-rich.coatings useful for improving corrosion-resistance are described in U.S. Patent No. 4,476,260 (Salensky). These coatings include generally a mixture of zinc pigment, thermoplastic epoxy resins, an organosilane and optionally aluminum trihydrate and one or more dispersing agents. A washcoat composition suitable for application to tin-plated mild steel is described in U.S. Patent No. 4,544,686 (Bromley), which includes an aqueous carrier medium and a binder. The washcoat composition includes a thermosetting acrylic polymer, an epoxy resin and an acid catalyst.

In addition, U.S. Patent No. 6,139,610 (Sinko) claims a corrosion-inhibiting composition for application to a metal substrate. The composition so claimed is a film-forming organic polymer which has dispersed therein a corrosion inhibiting pigment phase, which itself is a composite organic/inorganic hybrid microparticle formed of an inorganic corrosion inhibiting compound which is interfaced on a microscopic level with micro-particles formed of an organic corrosion-inhibiting compound. These inorganic and organic compounds are said to be distinctly identifiable by spectrum analysis, but physically combined into inseparable component phases having different chemical compositions.

And U.S. Patent No. 5,866,652 (Hager) relates to a coating on a metallic skin of an aircraft. The coating includes a continuous phase of an organic polymer or sol-gel, and a mixture of chromate-free salts dispersed throughout the continuous phase. The mixture of chromate-free salts includes carboxylate salts of rare earth metals and vanadate salts of alkali or alkali earth metals; and a borate salt of an alkali earth metal. The coating is reported to protect the metallic skin from significant pitting corrosion after 3,000 hours of exposure to a spray of 5 wt% sodium chloride solution. The coating is reported to be resistant to degradation by aircraft hydraulic fluid. In addition, the coating is reported to be able to withstand a 50-inch-pound forward impact delivered by a Gardner 160 pound capacity test machine.

Aqueous primer compositions containing substantially no volatile organic solvents are described in U.S. Patent No. 5,461,090 (David). The composition may also contain non-chromate corrosion inhibitors, preferably such as zinc phosphate and zinc molybdate.

In addition U.S. Patent No. 6,537,678 (Putnam) reports of non-carcinogenic corrosion inhibiting additives. These additives include an anodic corrosion inhibitor and cathodic corrosion inhibitor, where the anodic corrosion inhibitor is selected fromcompounds of vanadium, molybdenum, tungsten and the cathodic corrosion inhibitor is selected from compounds of cerium, neodymium, and praseodymium.

Further in "Challenges of chromate inhibitor pigments replacement in organic coatings", Progess in Organic Coatings, 42 (2001), pages 267-282, J. Sinko considers pigment grade corrosion inhibitors of different species, such as nitrites, chromates, molybdates, phosphates, metaborates and cyanamides.

Self-dispersing curable epoxy resins for coatings are disclosed in U.S. Patent No. 6,506,821 and international Patent Publication No. WO 96/20971. In U.S. Patent No. 6,506,821 (Huver), self dispersible curable epoxy resin composition are obtainable by the reaction of 1.0 equivalent of epoxy resin, 0.01 to 1.0 equivalent of a polyhydric phenol and 0.005 to 0.5 equivalent of an amine-epoxy adduct, the amine-epoxy adduct being a reaction product of an aromatic polyepoxide with a polyalkyleneamine. The aromatic polyepoxide and the polyoxyalkyleneamine are used in an equivalent ratio of 1:0.1 to 1:0.28.

In U.S. Patent No. 5,648,409 (Katar), self-dispersing curable epoxy resin compositions are prepared by reacting 1.0 equivalent of epoxy resin, 0.01 to 1.0 equivalent of a polyhydric phenol and 0.005 to 0.5 equivalents of an amine-epoxy adduct, the amine-epoxy adduct being a reaction product of 1.0 equivalent of an aromatic polyepoxide and 0.3 to 0.9 equivalent of a polyalkyleneamine.

Notwithstanding the state of the technology, it would be desirable to create alternative substantially VOC free primer and adhesive bonding systems that are storage stable at ambient temperatures for an extended period of time under ambient temperature conditions, without loss of performance; can be cured in about 45 to 120 minutes at a temperature within the range of about 220°F to about 350°F; are prepared with substantially no chromate component; and when cured, exhibits resistance to organic solvents and corrosion, so that the end user has a variety of commercial sources of advanced primers from which to choose.

Further, it would be desirable to provide a coating, a primer and sealant composition for application to metal surfaces for protecting exposed surfaces against corrosion.

### SUMMARY OF THE INVENTION

The present invention provides a substantially VOC free heat curable primer composition, which is shelf stable for a period of time of up to three months under ambient temperature conditions and suitable for curing in about 45 to 120 minutes, such as about 90 minutes, within the temperature range of about 220°F to about 350°F, such as about 250°F to about 350°F, in various applications within 90 minutes, preferably 60 minutes of application. The primer compositions of the present invention when applied to metal surfaces preferably inhibit corrosion and provide a long lasting resistance to surfaces against corrosion. Preferably, the composition is prepared without a chromate component and as such is substantially chromate free. When cured, the primer composition exhibits resistance to organic solvents and corrosion. The primer composition is also used to prepare an assembly of two substrates bonded by the primer and a cured adhesive.

The substantially VOC solvent free primer composition in its broadest sense is comprised of an aqueous dispersion of a thermosetting resin composition comprising a self-emulsifying epoxy resin obtainable by reaction of (a) epoxy resin, (b) polyhydric phenol, and (c) an amine-epoxy adduct, wherein the amine-epoxy adduct is a reaction product of an aromatic polyepoxide with a polyoxyalkylenamine; a corrosion inhibitor; water; and a curative.

The corrosion inhibitor is preferably based one or more of an organic zinc salt, an alkyl-ammonium salt or cycloalkyl-ammonium salt of a mercapto- and/or thio-compound or an alkyl-substituted derivative thereof, and/or on the combination of an anodic corrosion inhibitor and a cathodic corrosion inhibitor, provided the anodic corrosion inhibitor is not chromate, and/or one or more of an active ingredient.

The active ingredient is selected from the group of anti-corrosion compounds consisting of water soluble corrosion inhibitors, copper complexing agents, anti-corrosion pigments or pigments containing plumb, phosphates, wolframate, zirconate or iron, and combinations thereof.

In another preferred embodiment the corrosion inhibitors, when provided as solid and/or liquid particles, have a particle size which is less than the primer layer thickness of a coating. That kind of corrosion inhibitors are preferably pigments with a particle size of preferably less than 5 m, thus the particles are smaller than the primer layer thickness and provide less corroding surface. From a particle size distribution standpoint, preferably 95 % of the pigments have a particle size less than 5 m, more preferably 3 m and most preferably 99% of the particles have a particle size less than 2 m.

In certain embodiments, the thermosetting resin composition is a self-emulsifying curable epoxy resin, based on a polyoxyalkyleneamine prepared by reacting (a) 1.0 reactive equivalents of an epoxy resin, (b) from about 0.01 to 1.0 reactive equivalents (e.g. from about 0.4 to about 0.6 reactive equivalents or from about 0.65 to about 0.95 reactive equivalents) of a polyhydric phenol, and (c) from about 0.005 to 0.5 reactive equivalents of an amine epoxy adduct, wherein the amine-epoxy adduct is formed upon contacting 1.0 equivalents of an aromatic polyepoxide and from about 0.3 and 0.9 reactive equivalents of a polyoxyalkyleneamine. The preparation of such self-emulsifying curable epoxy resins is described in U.S. Patent No. 6,506,821 in detailed which is incorporated herein by reference.

Self-emulsifying curable epoxy resins are described in detailed in U.S. Patent No. 5,565,505 filed June 14, 1994 (which is a continuation-in-part of U.S. Serial No. 08/086,288, filed June 30, 1993) by J. Papalos et al., entitled "Self-Dispersing Curable Epoxy Resins, Dispersions Made Therewith, and Coating Compositions Made Therefrom", the disclosures of which are incorporated herein by reference.

The replacement of standard epoxy resins by self-emulsifying epoxy resins provides less free molecules and reduces the diffusion of water into the primer layer, thus swelling of the primer layer is decreased. Further, in the effort to the environment the use of self-emulsifying epoxy resin improves the cross linking in the curing and reduce the need of additional emulsifier.

Self-emulsifying epoxy resins are obtainable by first providing a solid epoxy resin, then providing dispersion of this solid epoxy resin, wherein the dispersion of the solid epoxy resin preferably comprises less than 10%, more preferably less than 5% and most preferably substantially no organic solvent. Desirably, the solid epoxy resin is dispersed in water.

The aqueous dispersion includes from about 10 to about 60 wt%, such as about 25 to about 40 wt%, of the dispersed primer, with the aqueous phase representing the balance.

As noted, the aqueous dispersion can be stored at ambient temperatures for a period of time of up to three months without any appreciable loss in the ability to be applied to a surface to be bonded, such as a metal surface, and can be cured in about 45 to 120 minutes at a temperature within the range of about 220°F to about 350°F, such as about 250°F to about 350°F. When cured, the primer exhibits excellent resistance to organic solvents and corrosion.

### DETAILED DESCRIPTION OF THE INVENTION

As noted above, the primer composition of the invention in its broadest sense is comprised of an aqueous dispersion of a thermosetting resin composition comprising a self-emulsifying epoxy resin obtainable by reaction of (a) epoxy resin, (b) polyhydric phenol, and (c) an amine-epoxy adduct, wherein the amine-epoxy adduct is a reaction product of an aromatic polyepoxide with a polyoxyalkylenamine a corrosion inhibitor; water; and a curative.

The thermosetting resin composition comprises a self-emulsifying curable epoxy resin based on a polyoxyalkyleneamine prepared by reacting an epoxy resin, a polyhydric phenol, and an amine epoxy adduct, wherein the amine-epoxy adduct is formed upon contacting an aromatic polyepoxide and a polyoxyalkyleneamine. See e.g. U.S. Patent No. 6,506,821, which is also incorporated herein by reference.

The epoxy resin to practice this invention may include one or more polyglycidyl ethers of polyhydric phenols having two or more epoxide groups and one or more six-carbon aromatized rings present in the molecule, as represented by the structural formula: 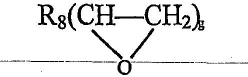 where R₈ represents a "g" valent C₆,-C₅₀ organic radical comprising at least one six-carbon aromatized ring (e.g. when g is 2, R₅ can be -CH₂-O-X-C(CH₃)₂-X-O-CH₂- or R₅ can be -CH₂-O-X-CH₂-X-O-CH₂- wherein X represents a phenyl group), and "g" is equal to or greater than 2 but less than or equal to 6.

Techniques to prepare such epoxy resins are known in the art, and include reacting compounds having 2 or more hydroxyl groups with epichlorohydrin in the presence of a suitable catalyst. Suitable epoxy resins are commercially available from a variety of sources. Epoxy resins suitable for use in the present invention are polyglycidyl derivatives of phenolic compounds, such as those available under the tradenames EPON 825, EPON 826, EPON 828, EPON 1001, EPON 1007 and EPON 1009 or waterborne dispersions under the tradenames EPI-REZ 3510, EPI-REZ 323, EPI-REZ 3515, EPI-REZ 3520, EPI-REZ 3522, EPI-REZ 3540 or EPI-REZ 3546 from Resolution Performance Products; DER 331, DER 332, DER 383, DER 354, and DER 542 from Dow Chemical Co.; GY285 from Vantico, Inc.

Other suitable epoxy resins include polyepoxides prepared from polyols and the like and polyglycidyl derivatives of phenol-formaldehyde novolacs, the latter of which are available commercially under the tradenames DEN 431, DEN 438, and DEN 439 from Dow Chemical Company and a waterborne dispersion ARALDITE PZ 323 from Vantico.

Cresol analogs are also available commercially such as ECN 1273, ECN 1280, ECN 1285, and ECN 1299 or waterborne dispersions ARALDITE ECN 1400 from Vantico, Inc. SU-8 and EPI-REZ 5003 are bisphenol A-type epoxy novolacs available from Resolution Performance Products.

EPON epoxy resins are also available from Shell Chemical Company, Houston, Texas, and DER- or DEN-brand epoxy resins from Dow Chemical Company, Midland, Michigan.

Examples of suitable epoxy resins are:
I) Polyglycidyl and poly(beta-methylglycidyl) esters obtainable by reacting a compound having at least two carboxy groups in the molecule with epichlorohydrin or betamethylepichlorohydrin, respectively. The reaction is advantageously carried out in the presence of bases. Examples of aromatic polycarboxylic acids which may be used include, for example, phthalic acid, isophthalic acid or terephthalic acid.
II) Polyglycidyl or poly (beta-methylglycidyl) ethers obtainable by reacting a compound having at least two free phenolic hydroxy groups with epichlorohydrin or betamethylepichlorohydrin, respectively, under alkaline conditions, or in the presence of an acid catalyst and with subsequent alkali treatment.

The epoxy compounds of this type may be derived from mononuclear phenols, such as, for example, resorcinol or hydroquinone; or they are based on polynuclear phenols, such as, for example, bis(4-hydroxyphenyl)methane, 4,4-dihydroxybiphenyl, bis(4-hydroxyphenyl)sulfone, 1,1,2,2-tetrakis(4-hydroxyphenyl)ethane, 2,2-bis(4-hydroxyphenyl)propane, 2,2-bis(3,5-dibromo-4-hydroxyphenyl) propane, and from novolacs obtainable by condensation of aldehydes, such as formaldehyde, acetaldehyde, chloral or furfuraldehyde, with phenols, such as phenol, or with phenols that are substituted in the nucleus by halide atoms or C₁-C₁₈ (preferably C₁-C₉) alkyl groups, such as, for example, 4-chlorophenol, 2-methylphenol or 4-tert-butylphenol, or by condensation with bisphenols, in the manner described above.

There are preferably used epoxy resins that have an epoxy content of from 2 to 10 equivalents /mole and that are glycidyl ethers or glycidyl esters of aromatic or alkylaromatic compounds. Especially preferred epoxy resins are polyglycidyl ethers of bisphenols, such as, for example, of 2, 2-bis(4-hydroxyphenyl) propane (bisphenol A) or bis(4-hydroxyphenyl) methane (bisphenol F), or novolacs formed by reacting formaldehyde with a phenol, with polyglycidyl ethers based on bisphenol A being particularly desirable. Preferred epoxy resins have an epoxide equivalent weight of less than about 400 grams/ equivalent, e.g. from about 100 grams/equivalent to about 350 grams/equivalent, more preferably from about 150 grams/equivalent to about 225 grams /equivalent, e.g. DER 331 available from Dow Chemical at about 182 grams/equivalent.

The polyhydric phenol reactant comprises one or more compounds each having a plurality of hydroxyl groups covalently bonded to one or more six-carbon aromatized rings. The polyhydric phenol reactant.may contain substituents such as alkyl, aryl, sulfido, sulfonyl, halo, and the like. The polyhydric phenol is represented by the structural formula: R₉(OH)ₕ wherein R₉ represents an "h" valent C₆-C₅₀ organic radical comprising at least one six-carbon aromatized ring, and "h" represents a number of phenolic hydroxyl groups where "h" is equal to or greater than 2 but less than or equal to 6.

Techniques to prepare suitable polyhydric phenol compounds are known in the art. Suitable polyhydric phenol compounds are commercially available from Dow Chemical Company, Midland Michigan, and Shell Chemical Company, Houston, Texas.

Illustrative of suitable polyhydric phenols are 2,2-bis(4-hydroxyphenyl) propane, 2,2-bis(3-bromo-4hydroxyphenyl)-propane, 2,2-bis(3,5-dichloro-4-hydroxyphenyl)propane, 2,2-bis(3-chloro-4hydroxyphenyl) propane, bis(4-hydroxyphenyl)-methane, bis(4hydroxyphenyl) sulfone, bis(4-hydroxyphenyl)sulfide, resorcinol, hydroquinone, phenol-formaldehyde novolac resins, tetrabrombisphenol A, 4,4'-dihydroxydiphenlcyclohexyne, 4,4'-dihydroxy-3,3'-dimethyldiphenylpropane, 4,4'-dihydroxy-benzophenol, bis-(4-hydroxyphenyl-1,1'-ethane, bis-(4-hydroxyphenyl)-1,1'-isobutane, bis-(4-hydroxyphenyl)-ether) and the like. The most preferred dihydric phenols are 2, 2-bis(4-hydroxyphenyl) propane (bisphenol A) and bis(4hydroxyphenyl) methane (bisphenol F).

The polyoxyalkyleneamine reactant comprises one or more amino-compounds where the amino-compound comprises both an amine group and a substantially water-soluble polyether chain.

The polyoxyalkyleneamine reactant is soluble or at least partially soluble in water. Techniques to prepare suitable polyoxyalkyleneamine reactants are known in the art, and include reacting a hydroxyl group containing initiator with ethylene oxide and/or propylene oxide, followed by conversion of the resulting terminal hydroxyl group(s) to amine(s).

Illustrative polyalkyleneamine comprises members selected from the group consisting of polyether amines containing primary amino groups attached to the terminus of a polyether backbone, which is based either on propylene oxide, ethylene oxide or mixed ethylene oxide and propylene oxide, wherein the molecular ratio of propylene oxide to ethylene oxide is 9:1, 3:19, 29:6 or 10:31 and the molecular weight of the polyalkyleneamine is up to 5000.

Among the commercially available polyoxyalkyleneamines suitable for use in the present invention is the Jeffamine-brand of polyoxyalkyleneamines available from Huntsman, such as Jeffamine M-600, M-1000, M-2005, M-2070.

Polyoxyalkyleneamines of this invention have the structural formula

R₁-O-R₂-CH₂CH(R₃)-NH₂

where R₁, designates a monovalent organic radical selected from the group consisting of C₁ to C₁₂ aliphatic, alicyclic or aromatic hydrocarbons, and R₂ represents a polyoxyalkylene chain having the structural formula: (CH₂-CH₂-O)ₐ-(CH₂-CH(R₄)-O)_{b} where R₄ is a monovalent organic radical selected from the group consisting of C₁ to C₄ aliphatic hydrocarbons, "a" designates a number of ethoxy groups (CH₂-CH₂-O), "b" designates a number of monosubstituted ethoxy groups (CH₂CH(R₄)-O) where the substitution of one monosubstituted ethoxy group is independent from the substitution of any other monosubstituted ethoxy group in the polyoxyalkylene chain, the sum of "a" and "b" is equal to or greater than 10 but less than or equal to 200, and where the sequence of ethoxy and monosubstituted ethoxy groups within a polyoxyalkylene chain may be completely random and/or there may be blocks of ethoxy and/or monosubstituted ethoxy groups, and R₃ designates H or a monovalent organic radical selected from C₁ to C₄ aliphatic hydrocarbons.

In certain embodiments, the polyoxyalkyleneamine is adducted with an aromatic polyepoxide and the adduct is reacted with an epoxy resin. In these embodiments, the preferred polyoxyalkyleneamines have R₁, R₃ and R₄ each equal to methyl, and either (i) a ratio of "a" and "b" of about 4:1, where the ethoxy and iso-propoxy groups are arranged in random blocks and the molecular weight of the polyoxyalkyleneamine is less than about 4000, or (ii) a block of 5 ethoxy groups joined to a random sequence of ethoxy and iso-propoxy groups wherein the ratio of "a" and "b" in the random sequence is about 7:3 and the molecular weight of the polyoxyalkyleneamine is less than about 4000, or (iii) a ratio of "a" and "b" of about 95:5, where the ethoxy and iso-propoxy groups are arranged substantially in two blocks and the molecular weight of the polyoxyalkyleneamine is less than about 6000, or(iv) a ratio of "a" and "b" of about 7:3, wherein the ethoxy and isopropoxy groups are present in random sequence and the molecular weight of the polyoxyalkyleneamine is less than about 4000, or (v) a ratio of "a" and "b" of about 4:1, where the ethoxy and isopropoxy groups are present in random sequence and the molecular weight of the polyoxyalkyleneamine is less than about 4000.

The most preferred polyoxyalkyleneamine is Jeffamine M-2070 from Texaco Chemical Company, Bellaire, Texas. According to Texaco, this polyoxyalkyleneamine is prepared by reacting methanol with ethylene oxide and propylene oxide followed by conversion of the resulting terminal hydroxyl group to an amine. The most preferred polyoxyalkyleneamine has an approximate molecular weight of 2000 and a mole ratio of propylene oxide to ethylene oxide of 10/32.

The aromatic polyepoxide reactant comprises one or more compounds each having a plurality of epoxide functional groups. The aromatic polyepoxide reactant has at least 2 epoxide groups present in the molecule, and may have as many as 4 epoxide groups present in the molecule.

These polyepoxides can be obtained by reaction of epichlorohydrin and polymeric aromatic alcohols or amines using known techniques. Suitable aromatic alcohols and amines are those containing more than two hydrogen equivalents capable of reacting with epichlorohydrin.

Examples of suitable aromatic alcohols are novolac phenolic resins and poly(vinyl phenol)s. Illustrative of suitable polyhydric phenols are 2,2-bis(4-hydroxyphenyl) propane, 2,2-bis(3-bromo-4hydroxyphenyl)-propane, 2,2-bis(3,5-dichloro-4-hydroxyphenyl)propane, 2,2-bis(3-chloro-4-hydroxyphenyl) propane, bis(4-hydroxyphenyl)-methane, bis(4-hydroxyphenyl)sulfone, bis(4-hydroxyphenyl) sulfide, resorcinol, hydroquinone, phenol-formaldehyde novolac resins, and the like.

Examples of suitable aromatic amines are 4,4-diaminodiphenylenemethane, 4,4-diaminodiphenylene sulfone, 3-aminobenzylamine, 3-phenylenediamine and 4,4-diaminoazodiphenylene.
.One representative class of aromatic polyepoxide reactant according to the invention has the structural formula: 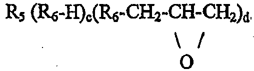 where R₅ designates an aromatic organic radical having a valency equal to the sum of "c" and "d", where the sum of "c" and "d" is equal to or greater than 2 but no more than or equal to 6 and where "d" is equal to or greater than 2 but less than or equal to 6. The term "aromatics" embraces groups such as phenyl, naphthyl, quinolyl, pyridyl, indoyl and the like in which the ring may be substituted by groups such as C₁ to C₆ alkyl, amino, nitro, halo, and the like and R₆ represents a divalent polyoxyalkylene chain having the structural formula:

-O-(CH₂-CH₂-O)ₑ-(CH₂-CH(R₇)-O)_{f}

where R₇ is a monovalent organic radical selected from C₁ to C₄ aliphatic hydrocarbons, "e" designates a number of ethoxy groups (CH₂-CH₂-O), "f" designates a number of monosubstituted ethoxy groups (CH₂-CH(R₇)-O) where the substitution of one monosubstituted ethoxy group is independent from the substitution of any other monosubstituted ethoxy group in the polyoxyalkylene chain, the sum of "e" and "f" is equal to or greater than 0 but less than or equal to 10, and where the sequence of ethoxy and monosubstituted ethoxy groups within a polyoxyalkylene chain may be completely random and/or there may be blocks of ethoxy and/or monosubstituted ethoxy groups. Typically, the average molecular weight of the polyoxyalkylene chain is from about 2000 to 10000.

The most preferred aromatic polyepoxides are epoxy novolac resins such as Araldite EPN 1138 and 1139, epoxy cresol novolac resins such as Araldite ECN 1235, 1273, 1280 and 12 99, epoxy phenol novolac resins such as Araldite PV 720, epoxy resin 0510, Araldite MY 720 and 721, and Araldite PT 810 all of which are available from Ciba-Geigy. Tetrad C and Tetrad X resins available from Mitsubishi Gas Chemical Co. are also suitable for use in this invention.

The preparation of certain of the self-emulsifying curable epoxy resins of the invention proceeds through an amine-epoxy adduct, where the amine-epoxy adduct is subsequently reacted with an epoxy resin and, optionally, a polyhydric phenol. The structure of the amine-epoxy adduct is dependent on the structures of the polyoxyalkyleneamine and the aromatic polyepoxide used in the preparation of the amine-epoxy adduct, as well as the relative ratio of the reactants. An adduct formed by reacting 1.0 equivalents of an aromatic polyepoxide and from about 0.3 to 0.9 reactive equivalents, preferably from about 0.6 and 0.8 reactive equivalents of a polyoxyalkyleneamine will produce compounds having the structural formula: 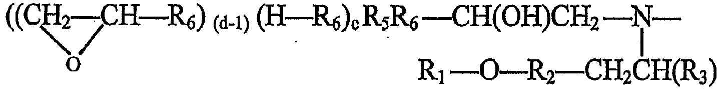 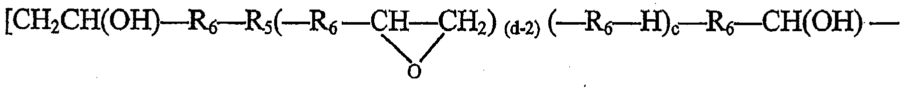 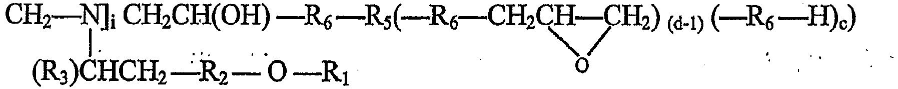 where "i" indicates a number of repetitive units where "i" is equal to or greater than zero (0) but less than or equal to about fifty.
If the adduct is formed by reacting 1.0 equivalents of an aromatic polyepoxide with from greater than about 1.0 equivalents (preferably from about 1.01 to about 2.5) reactive equivalents of a polyoxyalkyleneamine, the adduct will have the structural formula:

(R-NH-CH₂-CH(OH)CH₂-R₆)_{(d-1)}(H-R₆)_{c}-R₅-R₆-CH₂-CH(OH)CH₂-N(R)-[CH₂CH(OH) -R₆-R₅(-R₆CH₂-CH(OH) -CH₂-NH(R))_{(d-2)}(-R₆-H)_{c}-R₆CH₂- CH (OH) -CH₂-N(R)]ᵢ-CH₂CH(OH)CH₂-R₆-R₅(-R₆-CH₂CH(OH)-CH₂-NH(R))_{(d-1)}(-R₆-H)_{c}

where "i" indicates a number of repetitive units where "i" is equal to or greater than zero (0) but less than or equal to about fifty, typically from about 10 to about 20.

Preferably, the self-emulsifying epoxy resin of the present invention is a self-emulsifying bisphenol A which is optionally modified with phenol-formaldehyde epoxy resin, bisphenol F modified phenol-formaldehyde epoxy resin, wherein the phenol-formaldehyde is preferably an epoxy novolac resin, an epoxy cresol novolac resin, an epoxy phenol novolac resin, and the like.

Self-emulsifying epoxy resins are obtainable by first providing a solid epoxy resin, then providing dispersion of this solid epoxy resin, wherein the dispersion of the solid epoxy resin preferably comprises less than 10%, more preferably less than 5% and most preferably substantially no organic solvent. Desirably, the solid epoxy resin is dispersed in water.

A curative for the epoxy resin may be chosen from a host of classes of nitrogen-containing compounds. One such class of nitrogen-containing'compounds includes those having at least two amine functional groups available for reaction.

For instance, a nitrogen-containing compound having at least two primary and/or secondary amines may be represented as being within the following structure I: 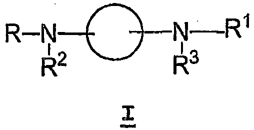 R, R¹, R², and R³ may be the same or different and 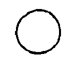 may be selected from hydrogen, C₁₋₁₂ alkyl, C₁₋₁₂ alkenyl, C₅₋₁₂ cyclo or bicycloalkyl, C₆₋₁₈ aryl, and derivatives thereof, and ○ is C₆₋₁₈ arylene, and derivatives thereof, and oxidized versions thereof. Preferably, at least one of R, R¹, R², and R³ is hydrogen.

Within structure I are a variety of materials that may be used herein, for instance, the aromatic diamines represented by structures II: 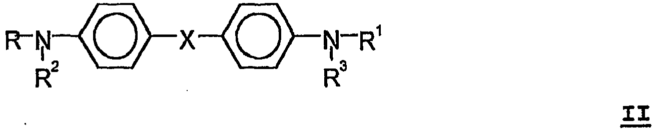 where X is CH₂, CR₂, NH, NR, O, S, or SO₂; and R, R¹, R², and R³ are as described above.

Within structure II are those compounds within structure III: 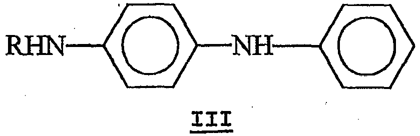 where R is as defined above. In addition, the oxidized version (shown below as structure IIIa) of structure III is also within the scope of the invention.

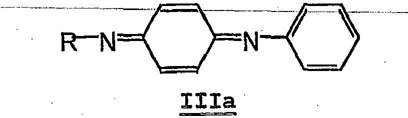

Within structure III is structure IIIb below, N-2-pentyl-N'-phenyl-p-phenylene diamine, which may also be used. 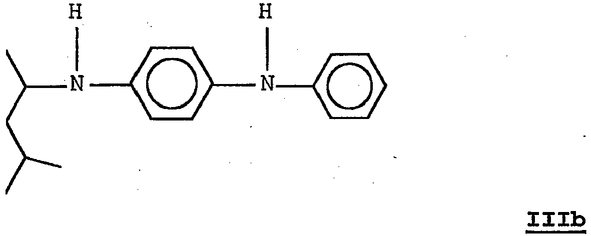 This phenylene diamine is believed to be available from Uniroyal Chemical Co., under the tradename FLEXZONE 7L.

Other specific examples within structure III include N-phenyl-N'-(1,3-dimethylbutyl)-p-phenylenediamine; N-phenyl-N'-isopropyl-p-phenylenediamine; N-phenyl-N'-(1-methylheptyl)-p-phenylenediamine; N-phenyl-N'-cyclohexyl-p-phenylenediamine; mixed diaryl-p-phenylenediamines; N,N'-diphenyl-p-phenylenediamine; N,N'-di-beta-naphthyl-p-phenylenediamine; N,N'-bis(1,4-dimethylpentyl)-p-phenylenediamine; N,N'-bis(1-ethyl-3-methylpentyl)-p-phenylenediamine; N,N'-bis(1-methylheptyl)-p-phenylenediamine; N-phenyl-N'-p-toluenesulfonyl-p-phenylenediamine; N-phenyl-N'-alkyl-p-phenylenediamines; dialkyl-p-phenylenediamines; N,N'-bis(1-cyclohexyl-1-ethyl)-p-phenylenediamine; N,N'-di(sec-hexyl)-p-phenylenediamine; N-(1,3-dimethylbutyl)-N'-(1,4-dimethylpentyl)-p-phenylenediamine; N-(sec-hexyl)-N'-(sec-alkyl)-p-phenylenediamines; N,N'-di(1,4-dimethylpentyl)-p-phenylenediamine; 2,4,6-tris(N-alkyl-p-phenylenediamino)-1,3,5-triazine; 6-ethoxy-1,2-dihydro-2,2,4-trimethylquinoline; and combinations thereof. See U.S. Patent Nos. 5,252,737 (Stern), 4,297,269 (Merten), 5,126,385 (Wheeler) and 5,068,271 (Wheeler).

More specific materials within structure I further include those within structure IV 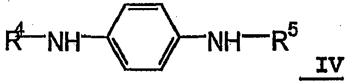 where R⁴ and R⁵ are hydrogen, C₅₋₁₂ alkyl, C₅₋₈ cycloalkyl, C₇₋₁₅ phenylalkyl, or C₆₋₁₀ aryl, with or without substitution by one or two C₁₋₄ groups.

Other nitrogen-containing compounds include

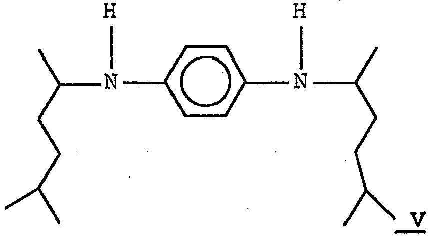

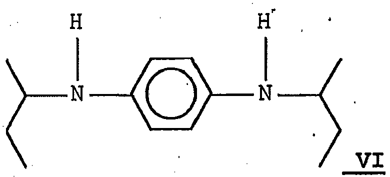

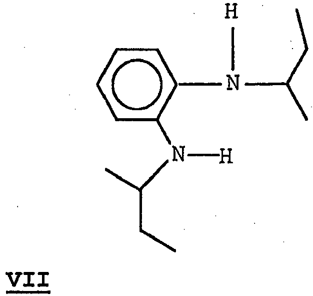

Structure V (UNILINK 7100) is N,N'-bis-4-(5-methyl-2-butyl)-p-phenylene diamine, structure VI (UNILINK 4100) is N,N'-bis-4-(2-butyl)-p-phenylene diamine, and structure VII (UNILINK 4102) is N,N'-bis-4-(2-methylpropyl)-o-phenylene diamine.

Other commercially available phenylene diamine cure accelerators include those available commercially from Flexsys under the tradename SANTOFLEX, such as SANTOFLEX 77PD and SANTOFLEX 715 PD, the latter of which being a mixture of 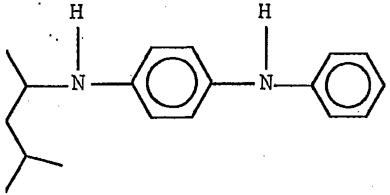 N-phenyl-N'-(1,3-dimethylbutyl)-p-phenylenediamine (CAS No. 793-24-8) (also called SANTOFLEX 6PPD or FLEXZONE 7, depending on the supplier), 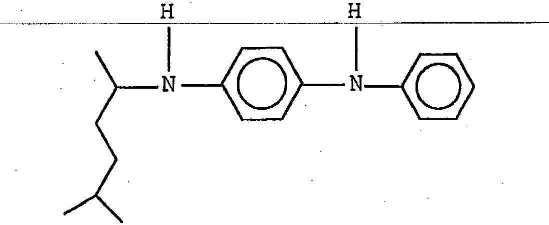 N-phenyl-N'-(1,4-dimethylpentyl)-p-phenylenediamine (CAS No. 3081-01-4), and 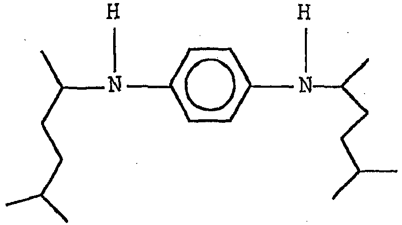 N,N'-bis(1,4-dimethylpentyl)-p-phenylene diamine (CAS No. 3081-14-9) (also called FLEXZONE 4L or SANTOFLEX 77PD, again depending on the supplier).
The commercially available phenylene diamines may be obtained under one or more of the following tradenames: SUMILIZER from Sumitomo, such as BPA, BPA-M1, 4A, and 4M, and UOP from Crompton, such as UOP 12, UOP 5, UOP 788, UOP 288, UOP 88, UOP 26, UOP 388, UOP 588, UOP 36 and UOP 688.

Other diamines includes aromatic diamines, such as trialkyl substituted benzene diamines, such as diethyl toluene diamines (CAS No. 68479-98-1), available commercially under the tradename ETHACURE 100 from Albemarle Corporation.

The nitrogen-containing compounds also include aza compounds (such as di-aza compounds or tri-aza compounds), examples of which include: 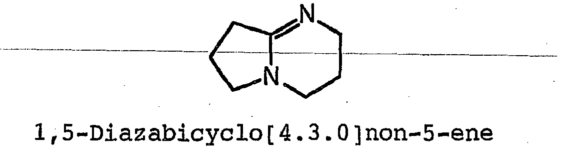 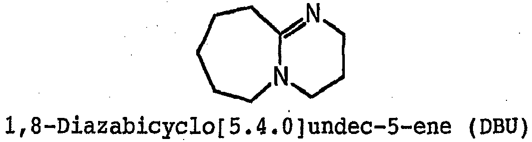 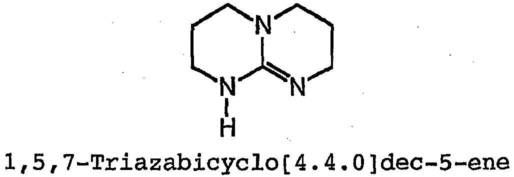 and the bicyclo mono- and di-aza compounds:

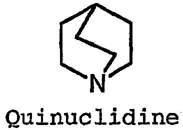

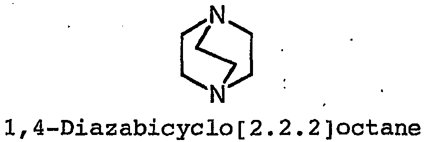

The nitrogen-containing compounds further include the aliphatic polyamines: diethylenetriamine, triethylenetetraamine, diethylaminopropylamine; the aromatic polyamines: benzyl dimethylamine, m-xylenediamine, diaminodiphenylamine and quinoxaline; and the alicyclic polyamines: isophoronediamine and menthenediamine.

Examples of still other nitrogen-containing compounds include imidazoles, such as isoimidazole, imidazole, alkyl substituted imidazoles, such as 2-ethyl-4-methylimidazole, 2,4-dimethylimidazole, butylimidazole, 2-heptadecenyl-4-methylimidazole, 2-methylimidazole, 2-undecenylimidazole, 1-vinyl-2-methylimidazole, 2-undecylimidazole, 2-heptadecylimidazole, 2-phenylimidazole, 1-benzyl-2-methylimidazole, 1-propyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-guanaminoethyl-2-methylimidazole and addition products of an imidazole and methylimidazole and addition products of an imidazole and trimellitic acid, 2-n-heptadecyl-4-methylimidazole and the like, generally where each alkyl substituent contains up to about 17 carbon atoms and desirably up to about 6 carbon atoms, aryl substituted imidazoles, such as phenylimidazole, benzylimidazole, 2-methyl-4,5-diphenylimidazole, 2,3,5-triphenylimidazole, 2-styrylimidazole, 1-(dodecyl benzyl)-2-methylimidazole, 2-(2-hydroxyl-4-t-butylphenyl)-4,5-diphenylimidazole, 2-(2-methoxyphenyl)-4,5-diphenylimidazole, 2-(3-hydroxyphenyl)-4,5-diphenylimidazole, 2-(p-dimethylaminophenyl)-4,5-diphenylimidazole, 2-(2-hydroxyphenyl)-4,5-diphenylimidazole, di(4,5-diphenyl-2-imidazole)-benzene-1,4, 2-naphthyl-4,5-diphenylimidazole, 1-benzyl-2-methylimidazole, 2-p-methoxystyrylimidazole, and the like generally where each aryl substituent contains up to about 10 carbon atoms and desirably up to about 8 carbon atoms. Commercially available examples include EPI-CURE P-101, EPI-CURE P-104 and EPI-CURE P-301, all of which are available commercially from Resolution Performance Products, or AJICURE PN-23 and AJICURE MY-24, each of which is available commercially from Ajinomoto Fine Chemicals, Tokyo, Japan, which of course can be used.

Bis(para-amino-cyclohexyl)methane is a particularly desirable nitrogen-containing compound for use herein [(PACM) CAS No. 1761-71-3, available commercially from Air Products], and OMICURE 33DDS, 3,3'-diaminodiphenylsulfone, CAS No. 599-61-1, commercially available from CVC Specialty Chemical.

Other desirable nitrogen-containing compounds for use herein include 4,4'-diaminodiphenylsulfone, dicyandiamide, and 4,4'-methylenebis(cyclohexylamine) and melamine-formaldehyde polymers including the commercially available ones RESIMENE 745, RESIMENE 747 and RESIMENE AQ 7550 from Solutia, St. Louis, Missouri.

Of course, combinations of these various nitrogen-containing compounds are also desirable for use in the compositions of the present invention.

The curative for the epoxy resin is typically used in an amount that yields about 25 to about 100% amine equivalents compared to the epoxy equivalents, with about 65 to about 100% amine equivalents compared to the epoxy equivalents being particularly desirable.

A catalyst, such as a urea-based one, is included to promote the cure of epoxy resins. When the catalyst is a urea-based one, the catalyst may be selected from 2,4-toluene bis(dimethyl urea) (CAS No. 17526-94-2), available commercially from CVC Specialty Chemical under the tradename 'OMICURE U-24; cycloaliphatic bisurea, available commercially from CVC Specialty Chemical under the tradename OMICURE U-35; 4,4-methylene bis(phenyldimethylurea) (CAS No. 10097-09-3), available commercially from CVC Specialty Chemical under the tradename OMICURE U-52; and combinations thereof. Other useful catalysts include amine-blocked toluenesulfonic acids, such as the amine-blocked p-toluenesulfonic acids available commercially under the tradenames NACURE 2500, NACURE 2547 and NACURE XC-2211 from King Industries.

Benzoxazines, when used, generally can be polymerized by exposure to elevated temperature conditions, such as a temperature from about 120 to 260°C. The temperature and/or time may be reduced, if the benzoxazine is initiated by cationic initiators, such as Lewis acids, and other known cationic initiators, such as metal halides such as AlCl₃, AlBr₃, BF₃, SnCl₄, SbCl₄, ZnCl₂, TiCl₅, WCl₆, VCl₄, PCl₃, PF₅, SbCl₅, (C₆H₅)₃C⁺SbCl₆⁻, and PCl₅; organometallic derivatives such as RAlCl₂, R₂AlCl, and R₃Al, where R is a hydrocarbon such as alkyl of 1 to 8 carbon atoms; metallophorphyrin compounds such as aluminum phthalocyanine chloride; methyl tosylate, methyl triflate, and triflic acid; and oxyhalides such as POCl₃, CrO₂Cl, SOCl₂, and VOCl₃. Other initiators include HClO₄ and H₂SO₄. The Lewis acid initiators are often used with a proton or cation donor such as water, alcohol, and/or organic acids, like alkylene organic acids, which are also effective catalysts for the cure of benzoxazine monomers and oligomers. Because of this ability to cure in the noted temperature range, benzoxazines are suitable choices for the inventive primer composition, particularly for 250°F service primer compositions.

In a further embodiment the corrosion inhibitor preferably comprises
i. one or more of an organic zinc salt, an alkyl-ammonium salt or cycloalkyl-ammonium salt of a mercapto- and/or thio-compound or an alkyl-substituted derivative thereof; and/or
ii. the combination of an anodic corrosion inhibitor and a cathodic corrosion inhibitor, provided the anodic corrosion inhibitor is not chromate, and/or
iii. one or more of an active ingredient.

The active ingredient is selected from the group of anti-corrosion compounds consisting of water soluble corrosion inhibitors, copper complexing agents, anti-corrosion pigments or pigments containing plumb, phosphates, wolframate, zirconate or iron and combinations thereof.

Preferably the active ingredient is selected from, but are not limited to, substituted or unsubstituted aryl, heteroaryl, such as 4-amino-salicylic acid, 5-amino-salicylic acid, phosphonic and diposphonic acid derivatives, like hydroxyethane-1,1 diphosphonic acid tetrasodium (C₂H₄O₇P₂Na₄), hydroxyethane-1,1-diphosphonic acid (C₂H₈O₇P₂), hydroxyethane-1,1-diphosphonic acid disodium (C₂H₆Na₂O₇P₂), commercially available under the tradenames Turpinal® 4NL, SL, 2NZ, 4NP from Solutia's Dequest or Cognis, esters of gallic acid, such as tannic acids bounded to glucose, C₇₆H₅₂O₄₆, commercially available by Sigma-Aldrich, a mixture of 5-nonylsalicylaldoxime and 2-hydroxy-5-nonylacetophenone oxime in hydrocarbon or kerosene, such as Lix 973N-C, commercially available from Cognis, imidazole derivatives, like 2-ethyl-4-methylimidazole, triazole derivatives, like methyl-1H-benzotriazole or derivatives from glucose or fructose or K₃[Fe(CN)₆], pigments containing plumb, such as CA₂PbO₄, PbSiO₃*3 PbO/SiO₂, 2 PbO*PbHPO₃ * 0.5 H₂O, pigments containing phosphates, such as zinc phosphates Zn₃(PO₄)₂* x H₂O, polyphosphates, such as Al(H₂PO₄)₃, chromium phosphates such as CrPO₄*3H₂O, pigments containing wolframate or zirconate or iron, such as 2CaO*Fe₂O₃, CaO*Fe₂O₃, Zn(Mg)O*Fe₂O₃ or other pigments such as Zn(Ca,Al)-polyphosphate/Ba(Zn,Mg,Al)-metaborate or blends of Ca/Zn/phosphate/phopshite/borate and combinations thereof.

The corrosion inhibitor is preferably based on one or more of an organic zinc salt, an alkyl-ammonium salt or cycloalkyl-ammonium salt of mercapto-and/or thio-compound or an alkyl-substituted derivative thereof.

In another embodiment the corrosion inhibitor comprises the combination of an anodic corrosion inhibitor and a cathodic corrosion inhibitor, provided the anodic corrosion inhibitor is not chromate, and one or more of an organic zinc salt, an alkyl-ammonium salt or cycloalkyl-ammonium salt of a mercapto- and/or thio-compound or an alkyl-substituted derivative thereof, an example of which is commercially available under the tradename WAYNCOR® 204.

As noted above, the organic zinc salt is preferably used, but other metal salt may also be used instead, such as magnesium, calcium, and the like.

Preferably, the corrosion inhibitors, when provided as solid and/or liquid particles, have a particle size which is less than the primer layer thickness of a coating and provide less corroding surface. Such corrosion inhibitors are preferably anti-corrosion pigments with a particle size of preferably less.than 5 m. From a particle size distribution standpoint, preferably 95 % of the pigments have a particle size less than 5 m, more preferably 3 m and most preferably 99% of the particles have a particle size less than 2 m, as measured by dynamic light scattering with microtrac UPA 150 ultrafine particle analyzer from Honeywell.

Corrosion pigments of that kind are preferably anti-corrosion pigments or pigments containing plumb, for example CA₂PbO₄, PbSiO₃*3 PbO/SiO₂, 2 PbO*PbHPO₃ * 0.5 H₂O, pigments containing phosphates, such as zinc phosphates Zn₃(PO₄)₂* x H₂O, polyphosphates, such as Al(H₂PO₄)₃, chromium phosphates such as CrPO₄*3H₂O, pigments containing wolframate or zirconate or iron, such as 2CaO*Fe₂O₃, CaO*Fe₂O₃, Zn(Mg)O*Fe₂O₃ or other pigments such as Zn(Ca,Al)-polyphophast/Ba(Zn,Mg,Al)-metaborate or a blend of Ca/Zn/phosphate/phopshite/borate, cerium molybdate, strontium tungstate or Wayncor® 204, and the like. Additionally, the grined pigment maybe any pigment, such as yellow pigments like DCC1202 Diarylide Yellow, which is commercially available from Dominion Colour Corp.

The anodic corrosion inhibitor carries a negative charge, and when placed in an electrochemical cell migrates toward the anode. The anodic corrosion inhibitor in accordance with the present invention is preferably selected from oxides of vanadium, molybdenum, tungsten, and zirconium. Of course, combinations of these oxides may also be used as the anodic corrosion inhibitor.

The cathodic corrosion inhibitor carries a positive charge, and when placed in an electrochemical cell migrates .toward the cathode. The cathodic corrosion inhibitor is preferably a cation of a rare earth element, examples of which include compounds of neodymium, cerium and lanthanum, such as cerium phosphate. Of course, combinations of these rare earth elements may also be used as the cathodic corrosion inhibitor.

The anodic corrosion inhibitor is ordinarily used in an amount within the range of about 1 to about 15 wt% based on the total weight of the solids content of the primer composition.

The cathodic corrosion inhibitor is ordinarily used in an amount within the range of about 1 to about 10 wt% based on the total weight of the solids content of the primer composition.

When the anodic corrosion inhibitor and the cathodic corrosion inhibitor are combined, oftentimes the vanadium, molybdenum, zirconium and tungsten of the anodic corrosion inhibitor and the rare earth element of the cathodic corrosion inhibitor may dissociate from their respective counterions and associate with one another. Thus, contemplated within the scope of the present invention is the combination of the anodic corrosion inhibitor and the cathodic corrosion inhibitor as an individual ionic compound, such as for example cerium molybdate.

The corrosion inhibitor component is further comprised of one or more of an organic zinc salt, an alkyl-ammonium salt or cycloalkyl-ammonium salt of a mercapto-and/or thio-compound or an alkyl-substituted derivative thereof, an example of which is commercially available under the tradename WAYNCOR 204. WAYNCOR 204, a product whose description is exemplified in U.S. Patent No. 6,139,610 (Sinko), is a corrosion inhibitor composition for application to a metal substrate which includes a film-forming organic polymer component and a dispersed pigment phase of a stable unitary hybrid which contains organic and inorganic solid phase constituents interfaced at a micro-crystalline level, which are inseparable by physical separation procedures and which display uniphase behavior. The inorganic solid phase includes a cation selected from Zn, Al, Mg, Ca, Sr, Ti, Zr, Ce, and Fe and an anion selected from phosphates, polyphosphates, phosphites, molybdates, silicates, and cyanamides. The organic phase includes zinc or alkyl-ammonium salts of organic mercapto- and thio-compounds or their alkyl-substituted derivatives, such as mercaptobenzothiazole, mercaptothiazoline, mercaptobenzimidazole, mercaptoimidazole, 2, 5-dimercapto-1,3,4-thiodiazole, 5,5-dithio-bis(1,3,4-thiadiazole-2(3H)-thione, mercaptobenzoxazole, mercaptothiazole, mercaptotriazole, mercaptopyrimidine, mercaptopyridine, mercaptoquinoline, alkyl- and cyclo-alkyl mercaptanes, N-alkyl- or N-cycloalkyl-dithiocarbamates, O-alkyl or O-cycloalkyl-dithiocarbonates, O,O-dialkyl- and O,O-dicycloalkyl-dithiophosphates. U.S. Patent No. 6,139,610 is expressly incorporated herein by reference.

In a desirable embodiment the corrosion inhibitor includes one or more of zinc cyanamide, zinc phosphate, zinc 2,5-dimercapto-1,3,4-thiadiazolate, zinc molybdate and cerium phosphate, and more particularly either the combination of cerium molybdate, zinc cyanamide, zinc phosphate and zinc-2,5-dimercapto-1,3,4-thiadiazolate, or the combination of zinc molybdate, zinc cyanamide, cerium phosphate and zinc-2,5-dimercapto-1,3,4-thiadiazolate. The invention also encompasses the corrosion inhibitor as so described.

In a preferred embodiment the corrosion inhibitors of an organic zinc salt, an alkyl-ammonium salt or cycloalkyl-ammonium salt of mercapto-and/or thio-compound or an alkyl-substituted derivative thereof and/or the combination of cathodic and anodic corrosion inhibitor provide a particle size which is less than the primer layer thickness of a coating. From a particle size distribution standpoint, preferably 95 % of the pigments have a particle size less than 5 m, more preferably 3 m and most preferably 99% of the particles have a particle size less than 2 m, as measured by dynamic light scattering with microtrac UPA 150 ultrafine particle analyzer from Honeywell. Corrosion inhibitors of that kind are preferably pigments, such as Wayncor® 204 or Cerium molybdate. Corrosion pigments of that size are available via fine grinding.

The micro-milled particles, as noted above, enhance dispersibility of the particles in primers, thus sedimentation of the particles is reduced. Dispersions with micro-milled Wayncor@ 204 or cerium have a slower sedimentation performance comparing to dispersions of non-grinned Wayncor® 204 or cerium molybdate. When agitating the dispersions and subsequently observing the sedimentation, the micro-milled particles dispersions provide a sedimentation performance which is preferably equal or greater than 15 hours, more preferably equal or greater than 24 hours. Whereas dispersions with non-grinned particles show a sedimentation within 10 minutes.

The corrosion inhibitor may be used in an amount of about 0.001 to about 15 wt%, such as about 0.5 to 15wt%, desirably about 1 to about 10 wt%, preferably about 3 to about 7 wt%, based on the total primer composition.

In addition, a variety of other additives may be included, such as surfactants, which include but are not limited to wetting agents, dispersing agents, grinding agents, and defoamers.

Examples of the surfactants include those available from Air Products under the tradename SURFYNOL, such as 2205, 420, 440, 465, 485, FS-80, FS-85, DF-37, TG, and GA; those available from BYK-Chemie, such as under the BYK tradename, like BYK-019, BYK-021, BYK-022, BYK-023, BYK-024, BYK-025, BYK-028, BYK-044, BYK-151,- BYK-155, BYK-156, BYK-345, BYK-346, BYK-348, BYK-380, BYK-381, or the DISPERBYK tradename, like DISPERBYK-181, DISPERBYK-183, DISPERBYK-184, DISPERBYK-185, DISPERBYK-190, DISPERBYK-191, and DISPERBYK-192; and those available from the Union Carbide division of Dow Chemical under the TRITON tradename, such as TRITON X-100, X-114, X-305, X-405, and N-101.

Additives may also include rheology modifiers such as those available from Rheox under the tradename BENTONE, such as EW, LT, SD-1, and SD-2; the THIXCINE tradename, such as THIXCINE GR, THIXCINE R, and THIXATROL NR-22; or under the tradename RHEOLATE, such as 210, 255, 300, 310, 350, 2000, 2001, and 5000.

Others additives that may desirably be included in the inventive primer compositions include acrylic flow agents such as COROC A-2678-M from Cook Composites and Polymers Company and MODAFLOW AQ-3025 from Solutia.

Additives may also include anti-foaming agents such as FOAMASTER EXP-63, FOAMASTER G, FOAMASTER H and FOAMASTER NS-1 from Henkel Corporation; and SURFYNOL DF, DF-62, DF-70, DF-75, DF-110D and DF-110L from Air Products.

Additives may also include fillers such as the various forms of silica and alumina; other metal oxides such as titanium oxide and iron oxides; tougheners; and colorants such as dyes and pigments to provide a desired color to the primer, like DCC1202 Diarylide Yellow.

The subject invention also includes a bonding system based on the primer composition described above and an adhesive, as well as a bonded assembly manufactured therefrom. The bonded assembly includes at least two substrates aligned in a spaced apart relationship, each of which having an inwardly facing surface and an outwardly facing surface, between the inwardly facing surface of each of the two substrates is a bond formed by the cured primer composition and the cured adhesive.

Substrates that may benefit from the present invention include aluminum alloys, such as 2024T3 Bare and Clad, and Clad 6061 and 7075 or any light metal. Other substrates that may benefit include magnesium, titanium, alloys of stainless steel, such as AMS3SS, and high strength alloys recently developed for structural aerospace applications.

The inventive primer composition may be applied to such substrates by any of a variety of coating techniques, including spray coating (conventional or electrostatic), pour coating, dip coating, brushing, and the like. Once applied to the substrate, the inventive primer composition can be air dried and then the primer-applied substrate placed in an airflow through oven.

Thus, the invention also relates to a primed substrate, such as a metal substrate, which includes the inventive primer composition applied to the substrate. The primed substrate may be used in conjunction with an epoxy resin composition for application, which epoxy resin composition is in the form of a film.

Such epoxy adhesive film ordinarily cure at a temperature of 250°F and provides service performance in the 180°F to 250°F performance range or a film that cures at a temperature of 350°F and provides service performance at 350°F for periods of time at 350°F for up to about 1,000 hours. Examples of such adhesive films include in the former case EA9696 from Loctite Aerospace, Bay Point, California and AF163-2 from 3M, Minneapolis, Minnesota; examples of films used in the latter case include EA9657 from Loctite Aerospace, Bay Point, California and FM377 from Cytec Industries, Stamford, CT. In addition, various structural paste adhesives may be used with the inventive primer composition.

In another aspect of the invention, a bonded assembly is provided which includes two substrates aligned in a spaced apart relationship, each of which having an inwardly facing surface and an outwardly facing surface, between the inwardly facing surface of each of the two substrates is a bond formed by the inventive primer composition and a cured adhesive, such as those epoxy adhesives noted above. In this aspect, the substrates may be constructed of metal or a composite.

The present invention will be more fully appreciated when viewed together with the examples.

### Examples

Primer formulations were prepared from the noted components in the amounts listed in the following tables, the relative amounts of the respective components being set forth on a weight percent basis.

Once the primer compositions were so prepared, the performance of each such primer composition in inhibiting corrosion on certain substrates, according to ASTM B117 1000-hour salt spray, was evaluated.

All salt fog exposure was conducted on primed 2024T3 Bare and Clad aluminum and 6061T6 Bare aluminum panels, the surfaces of which were prepared using conventional phosphoric acid anodizing. Each of the panels was primed with the primer composition to 0.15 to 0.35 mils dry thickness and cured for a period of time of 45 minutes at a temperature of 350°F. Scribes were made in the dried panels using a precision mill to a depth of 3/1,000 inch. Panels were exposed to 95°F/5% salt fog in a commercial salt fog chamber, in which the panels were placed vertically in PVC racks during exposure. All non-primed areas were covered using clear plastic pressure sensitive tape prior to exposure.

Panels were exposed to 1,000 hours of such salt fog, and pitting, staining and brightness of the scribe were considered in ranking effectiveness of the corrosion inhibitors in protecting the aluminum panel from corrosion. The panel ranking scale is defined as 1 being the best and 8 being the worst in over-all protection. Pitting and staining were graded as none, very slight, slight, moderate and heavy. Panel scribe was graded as percent brightness in the scribe area with the remaining scribe area being percent gray with no white precipitate formed in the scribe. The other scribe description is percent white precipitate formed in the scribe area with the remaining percent grayish in color.

Primer compositions are prepared as set forth in table 7 and 8 with relative amounts of the respective components being set forth on a weight percent basis. In table 9 and 10, the corrosion inhibitor set forth in table 7 and 8 is identified with precision. The primer compositions in table 10 are prepared with self-emulsifying epoxy resins. Examples 21 to 31 of table 8 are comparative examples.

The synthesis of self-emulsifying epoxy resin is described in U.S. Patent No. 6,506,821.

The synthesis of the self-emulsifying epoxy resin comprises first, the preparation of a solid resin and second, the preparation of the dispersion of the solid resin:

### Step 1:

592.52 g (3.4 eq) DEN431 and 154.02 g (0.07 eq) Jeffamine M2070 and 172.98 (1.5 eq.) bisphenol A and 0.69 g triphenylphosphine are mixed.together and heated up to 155°C - 165°C for about 2 hours. Then the mixture is cooled down to about < 130°C and 125.48 g ethoxypropanole is added to homogenize the mixture.

### Step 2:

1045 g of the obtained solid resin from step 1 is heated to 65°C and 146.14 g of 65°C warm distilled water is added. The mixture is stirred for 15 minutes. Afterwards the mixture is cooled down to 35°C and the inversion from W/O to O/W emulsion is checked by taking a small sample of the emulsion and dissolving the sample in surplus water. Subsequently, 457.30 g of room tempered distilled water is slowly added until the viscosity of the mixture decreases. At that time the water is rapidly added. The mixture is then stirred 15 minutes without any further cooling and the product is filtered over a sieve (1000 microns).

Once the primer compositions were prepared, the performance of each such primer composition in inhibiting corrosion on certain substrates, according to ASTM B117 1000-hour salt spray test (as described above, results in Tables 8 and 10), AIM 10-01-001/AITM 5-0009 bondline corrosion test Droplet test and MEK test, was evaluated.

The droplet test was performed on pre-treated primed 2024T3 bare and clad aluminium. In the pre-treatement the panels were degreased, oxidized with Ridoline 1580 (60°C, 6% Ridoline in deionized water, for 5 minutes) and pickled in 15% HNO₃ for 10 seconds at room temperature. Each of the panels was then primed with primer composition to 5 to 10 m primer layer thickness at 120°C for 1 hour. Scribes were made in the panels using a precision mill. Then a 3% salt solution was applied onto the scribes. The salt drop was prevented from dehydration by protecting the drop from the open air. Therefore a glass with water saturated cotton wool or a paper is attached on the base of the glass.and is put over the drop. The corrosion was; determined after.1000h. The results are recorded in Table 8.

The MEK test was performed on primed 2024T3 bare and clad aluminium. Hereby, a swab was soaked with methyl-ethyl-ketone (MEK) and was rubbed with mechanical pressure across a cured primed surface. To meet the requirements in the MEK test the surface must not be rubbed off after 100 double rubs with the soaked swab. The results are recorded in Tables 8 and 10.

Bondline corrosion test was performed on primed anodized 2024T3 clad aluminium. The panels were bonded together with an epoxy-film adhesive (e.g. Henkel product EA 9696.03NW) by known methods under vacuum pressure in an autoclave. The heating rate was 1.5K, starting at room temperature and heating up to 121°C where it was held 90 minutes. Afterwards the panels were exposed to salt fog in a salt fog chamber. The panels were then torn apart and the corroded surface area (after 45, 90, 180 days) was determined. The results are recorded in Tables 11.

In table 12 some more precise examples of the present inventions were given.

The improved corrosion inhibition of a primer composition is achieved via fine grinding of the particles and/or in combining one or more of different types of corrosion inhibitors that has been described above and/or in using self-emulsifying epoxy resins.

| **Table 7** | |
|---|---|
| Components | Amount |
| Epoxy | 32.6-33.2 |
| Curative | 1.2-0.99 |
| Surfactant | 1.2-1.1 |
| Colorant | 0.3-0.2 |
| Corrosion inhibitor | 6.0-0.05 |
| Inorganic Filler | 0.09-0.07 |
| Glycol Ether PM | 2.0-1.8 |
| Acetic Acid | 0.25-0.1 |
| Deionized water | adjusted to 100 |

| **Table 8** | | | | | | | | | | | |
|---|---|---|---|---|---|---|---|---|---|---|---|
| **Corrosion Inhibitor components** | **Examples** | | | | | | | | | | |
| | **21** | **22** | **23** | **24** | **25** | **26** | **27** | **28** | **29** | **30** | **31** |
| Cerium Molybdate | 2.18 | 1.96 | 1.96 | 2.18 | 2.18 | 2.18 | 2.18 | 2.18 | 2.18 | 2.18 | 2.18* |
| Wayncor 204 | 2.50 | 2.25 | 2.25 | 2.50 | 2.50 | 2.50 | 2.50 | 2.50 | 2.50 | 2.50 | 2.50* |
| 4-amino-salicylic acid | ----- | 1.28 | ----- | ----- | ----- | ----- | ----- | ----- | ----- | ----- | ----- |
| 5-amino-salicylic acid | ----- | ----- | 1.28 | ----- | ----- | ----- | ----- | ----- | ----- | ----- | ----- |
| Glucose | ----- | ----- | ----- | 0.81 | ----- | ----- | ----- | ----- | ----- | ----- | ----- |
| Fructose | ----- | ----- | ----- | ----- | ----- | ----- | ----- | ----- | ----- | ----- | ----- |
| Turpinal | ----- | ----- | ----- | ----- | 0.28 | ----- | ----- | ----- | ----- | ----- | ----- |
| Resorcine | ----- | ----- | ----- | ----- | ----- | ----- | 0.68 | ----- | ----- | ----- | ----- |
| 5-methyl- 1H- benotriazole | ----- | ----- | ----- | ----- | ----- | 0.28 | ----- | ----- | ----- | ----- | ----- |
| Tannin | ----- | ----- | ----- | ----- | ----- | ----- | ----- | 0.33 | ----- | ----- | ----- |
| Lix973 NC | ----- | ----- | ----- | ----- | ----- | ----- | ----- | ----- | 0.07 | ----- | ----- |
| Imidazole | ----- | ----- | ----- | ----- | ----- | ----- | ----- | ----- | ----- | 0.99 | ----- |
| | | | | | | | | | | | |

| **2024T3 Bare Aluminum** | | | | | | | | | | | |
|---|---|---|---|---|---|---|---|---|---|---|---|
| Droplet test | flaking | none | Slight | very slight | none | flaking | Very slight | none | none | none | none |
| Panel Scribe | flaking | none | slight | very slight | slight | very slight | ----- | ----- | ----- | ----- | slight |
| MEK test | none | abrasion | abrasion | none | none | none | none | none | none | none | none |
| | | | | | | | | | | | |

| **2024T3 Clad Aluminum** | | | | | | | | | | | |
|---|---|---|---|---|---|---|---|---|---|---|---|
| Droplet test | slight | none | slight | flaking | none | very slight | very slight | ----- | none | none | ----- |
| Panel Scribe | flaking | none | slight | very slight | slight | very slight | ----- | ----- | ----- | ----- | none |
| MEK test | none | abrasion | abrasion | none | none | none | none | none | none | none | none |

| | | | | | | | | | | | |
|---|---|---|---|---|---|---|---|---|---|---|---|
| *particle size << 2 m | | | | | | | | | | | |

| **Table 9** | |
|---|---|
| Components | Amount |
| Epoxy | 21.44 |
| Curative | 1.15 |
| Surfactant | 1.3-1.2 |
| Colorant | 0.23 |
| Corrosion inhibitor | 5.0-0.01 |
| Inorganic Filler | 0.09 |
| Glycol Ether PM | 1.9-1.8 |
| Acetic Acid | 0.65-0.2 |
| Deionized water | adjusted to 100 |

| **Table 10** | | | | | | | | |
|---|---|---|---|---|---|---|---|---|
| **Corrosion Inhibitor Components** | **Examples** | | | | | | | |
| | **32** | **33** | **34** | **35** | **36** | **37** | **38** | **39** |
| Cerium Molybdate | 2.18 | 2.18 | 2.18 | 2.18 | 2.18 | 2.18 | 2.18 | 2.18* |
| Wayncor 204 | 2.50 | 2.50 | 2.50 | 2.50 | 2.50 | 2.50 | 2.50 | 2.50* |
| 4-amino-salicylic acid | ----- | ----- | ----- | 0.02 | ----- | ----- | 0.01 | 0.01 |
| Fructose | ----- | 0.03 | ----- | ----- | ----- | ----- | ----- | ----- |
| 5-methyl-1H-benotriazole | ----- | ----- | ----- | ----- | ----- | 0.17 | ----- | ----- |
| Imidazole | ----- | ----- | 0.03 | ----- | 0.07 | ----- | ----- | ----- |
| | | | | | | | | |

| **2024T3 Bare Aluminum** | | | | | | | | |
|---|---|---|---|---|---|---|---|---|
| Panel Scribe | Very slight | slight | none | none | none | slight | ----- | ----- |
| MEK test | none | none | none | none | none | none | none | none |
| | | | | | | | | |

| **2024T3 Clad Aluminum** | | | | | | | | |
|---|---|---|---|---|---|---|---|---|
| Panel Scribe | Very slight | very slight | slight | Very slight | slight | slight | ----- | ----- |
| MEK test | none | none | none | none | none | none | none | none |

| | | | | | | | | |
|---|---|---|---|---|---|---|---|---|
| *particle size << 2 m | | | | | | | | |

| **Table 11** | | | |
|---|---|---|---|
| days | Examples | | |
| | 32 | 38 | 39 |
| 45 | 0.6% | 0.2% | 0.6% |
| 90 | 3.9% | 6.8% | 2.9% |
| 180 | 18.1% | 9.0% | 10.4% |

| **Table 12** | | | | | |
|---|---|---|---|---|---|
| **Components** | **Examples** | | | | |
| | **22** | **34** | **35** | **36** | **31** |
| Epi-Rez 3546 | 17.55 | - | - | - | 18.03 |
| Epi-Rez 3522 | 6.81 | - | - | - | 6.80 |
| self-emulsifying epoxy resin | - | 13.65 | 13.65 | 13.65 | - |
| PZ 323 | 7.79 | 7.79 | 7.79 | 7.78 | 7.79 |
| Tetremethyl-decyne-diol | 1.18 | 1.25 | 1.25 | 1.21 | 1.20 |
| Heloxy 505 | 0.57 | 0.57 | 0.57 | 0.57 | 0.57 |
| Modified hectorite clay | 0.08 | 0.09 | 0.09 | 0.09 | 0.08 |
| Yellow pigment | 0.20 | 0.23 | 0.23 | 0.23 | 0.23 |
| Waynoor 204 | 2.25 | 2.50 | 2.50 | 2.50 | 2.50* |
| Cermolybdat | 1.96 | 2.19 | 2.19 | 2.18 | 2.18* |
| Glykol Ether EM | 1.90 | 1.90 | 1.90 | 1.90 | 1.90 |
| Acidic acid | 0.20 | 0.61 | 0.61 | 0.20 | 0.20 |
| Epicure P101 | 0.87 | 0.87 | 0.87 | 0.87 | 0.87 |
| Amicare OG1400 | 0.28 | 0.28 | 0.28 | 0.28 | 0.28 |
| 4-Aminosalicylsäure | 1.28 | - | 0.02 | - | - |
| Imidazole | - | 0.03 | - | 0.07 | - |
| Deionized water | adjusted to 100 | adjusted to 100 | adjusted to 100 | adjusted to 100 | adjusted to 100 |

| | | | | | |
|---|---|---|---|---|---|
| *particle size << 2 m | | | | | |

The examples indicate the improvement in corrosion resistance of substrates by the synergistic combination of different corrosion inhibitors and/or the self- emulsifying epoxy resins.

Preferably combination of Wayncor® 204, Cerium molybdate and one or more of an active ingredient was found to be more effective than Wayncor® 204 and the combination of an anodic and cathodic corrosion inhibitor themselves.

By grinding of Wayncor® 204 and the anodic/cathodic corrosion inhibitor and/or replacement of the epoxy resin by self-emulsifying epoxy resins the corrosion inhibition of metal surfaces is enhanced.

## Claims

1. An aqueous-based primer composition, comprising:
a. a thermosetting resin composition comprising a self-emulsifying epoxy resin obtainable by reaction of (a) epoxy resin, (b) polyhydric phenol, and (c) an amine-epoxy adduct, wherein the amine-epoxy adduct is a reaction product of an aromatic polyepoxide with a polyoxyalkyleneamine
b. a corrosion inhibitor
c. water; and
d. a curative.

2. The composition of claim 1, wherein the corrosion inhibitor comprises
i. one or more of an organic zinc salt, an alkyl-ammonium salt or cycloalkyl-ammonium salt of a mercapto-and/or thio-compound or an alkyl-substituted derivative thereof; and/or
ii. the combination of an anodic corrosion inhibitor and a cathodic corrosion inhibitor, provided the anodic corrosion inhibitor is not chromate, and/or
iii. one or more of an active ingredient selected from the group of anti-corrosion compounds comprising water soluble corrosion inhibitor, copper-complexing agents or anti-corrosion pigments or pigments containing plumb, phosphates, wolframate, zirconate or iron, and combinations thereof.

3. The composition of Claim 2, wherein the particle size of
i. one or more an organic zinc salt, an alkyl-ammonium salt or cycloalkyl-ammonium salt of a mercapto-and/or thio-compound or an alkyl-substituted derivative thereof; and/or
ii. cathodic and anodic corrosion inhibitor; and/or
iii. one or more of the active ingredient
are less than the primer layer of a coating.

4. The composition of Claim 3, wherein the particle size of the corrosion inhibitors is not greater than 5 µm.

5. The composition of Claim 1, being substantially free of volatile organic solvents.

6. The composition of Claim 1, being substantially free of chromate.

7. The composition of Claim 1, further comprising a catalyst.

8. The composition of Claim 1, wherein the curative is a nitrogen-containing compound.

9. The composition of Claim 8, wherein the nitrogen-containing compound is a member selected from the group consisting of N-phenyl-N'-(1,3-dimethylbutyl)-p-phenylenediamine; N-phenyl-N'-cyclohexyl-p-phenylenediamine; mixed diaryl-p-phenylenediamines; N,N'-diphenyl-p-phenylenediamine; N,N'-di-beta-naphthyl-p-phenylenediamine; N,N'-bis(1,4-dimethylpentyl)-p-phenylenediamine; N,N'-bis(1-ethyl-3-methylpentyl)-p-phenylenediamine; N,N'-bis(1-methylheptyl)-p-phenylenediamine; N-phenyl-N'-p-toluenesulfonyl-p-phenylenediamine; N-phenyl-N'-alkyl-p-phenylenediamines; dialkyl-p-phenylenediamines; N,N'-bis(1-cyclohexyl-1-ethyl)-p-phenylenediamine; N,N'-di(sec-hexyl)-p-phenylenediamine; N-(1,3-dimethylbutyl)-N'-(1,4-dimethylpentyl)-p-phenylenediamine; N-(sec-hexyl)-N'-(sec-alkyl)-p-phenylenediamines; N,N'-di(1,4-dimethylpentyl)-p-phenylenediamine; 2,4,6-tris(N-alkyl-p-phenylenediamino)-1,3,5-triazine; 6-ethoxy-1,2-dihydro-2,2,4-trimethylquinoline; N-phenyl-N'-isopropyl-p-phenylenediamine; N-phenyl-N'-(1-methylheptyl)-p-phenylenediamine; and combinations thereof.

10. The composition of Claim 8, wherein the nitrogen-containing compound is a member selected from the group consisting of bis(para-amino-cyclohexyl)methane, 3,3'-diaminodiphenylsulfone, 4,4'-diaminodiphenylsulfone, dicyandiamide, diethyl toluene diamines, and 4,4,'-methylenebis(cyclohexylamine).

11. The composition of Claim 1, wherein the primer composition can be stored at ambient temperatures for a period of time of up to three months without loss of ability to be applied to a metal surface.

12. The composition of Claim 1, wherein the primer composition when cured exhibits resistance to organic solvents.

13. The composition of Claim 1, wherein the primer composition when applied to metal surfaces inhibits corrosion and provides a long lasting resistance to surfaces against corrosion.

14. A primed substrate comprising the composition of Claim 1 and a substrate, wherein the epoxy resin is in the form of a film.

15. The primed substrate of Claim 14, wherein the substrate is constructed of metal.

16. A method of making a primer composition of Claim 1, comprising at least the steps of:
a. providing a thermosetting resin composition comprising a self-emulsifying epoxy resin obtainable by reaction of (a) epoxy resin, (b) polyhydric phenol, and (c) an amine-epoxy adduct, wherein the amine-epoxy adduct is a reaction product of an aromatic polyepoxide with a polyoxyalkyleneamine;
b. providing a corrosion inhibitor comprising
i. one or more of an organic zinc salt, an alkyl-ammonium salt or cycloalkyl-ammonium salt of a mercapto-and/or thio-compound or an alkyl-substituted derivative thereof; and/or
ii. the combination of an anodic corrosion inhibitor and a cathodic corrosion inhibitor, provided the anodic corrosion inhibitor is not chromate, and/or
iii. one or more of an active ingredient selected from the group of anti-corrosion compounds consisting of water soluble corrosion inhibitors, copper complexing agents, anti-corrosion pigments or pigments containing plumb, phosphates, wolframate, zirconate or iron, and combinations thereof;
c. providing water; and
d. providing a curative.

17. A bonded assembly comprising two substrates aligned in a spaced apart relationship, each of which having an inwardly facing surface and an outwardly facing surface, between the inwardly facing surface of each of the two substrates is a bond formed by the primer composition of Claim 1 and a cured adhesive.

18. Reaction products of the composition of Claim 1.

19. A bonding system comprising:
a. primer composition according to Claim 1; and
b. an adhesive.

20. The bonding system of Claim 19, wherein the adhesive is in the form of a film.

21. The primer composition of Claim 1, wherein
components a., b., and d. are dispersed in component c. in an amount from 10 to about 60 percent by weight.

## Patentansprüche

1. Wasserbasierte Grundierungszusammensetzung, umfassend:
a. eine wärmehärtende Harzzusammensetzung, die ein selbstemulgierendes Epoxidharz umfasst, das durch die Reaktion von (a) Epoxidharz, (b) mehrwertigem Phenol und (c) einem Amin-Epoxid-Addukt erhaltbar ist, wobei das Amin-Epoxid-Addukt ein Reaktionsprodukt eines aromatischen Polyepoxids mit einem Polyoxyalkylenamin ist;
b. ein Korrosionsschutzmittel;
c. Wasser; und
d. ein Härtungsmittel.

2. Zusammensetzung nach Anspruch 1, wobei das Korrosionsschutzmittel Folgendes umfasst:
i. eines oder mehrere von einem organischen Zinksalz, einem Alkyl-Ammonium-Salz oder Cycloalkyl-Ammonium-Salz einer Mercapto- und/oder Thio-Verbindung oder einem Alkyl-substituierten Derivat davon; und/oder
ii. die Kombination eines anodischen Korrosionsschutzmittels und eines kathodischen Korrosionsschutzmittels, vorausgesetzt, dass das anodische Korrosionsschutzmittel kein Chromat ist; und/oder
iii. einen oder mehrere von einem Wirkstoff, der aus der Gruppe von Korrosionsschutzverbindungen ausgewählt ist, die ein wasserlösliches Korrosionsschutzmittel, Kupferkomplexbildner oder Korrosionsschutzpigmente oder Pigmente, die Blei, Phosphate, Wolframat, Zirconat oder Eisen enthalten, und Kombinationen davon umfassen.

3. Zusammensetzung nach Anspruch 2, wobei die Partikelgrößen von
i. einem oder mehreren von einem organischen Zinksalz, einem Alkyl-Ammonium-Salz oder Cycloalkyl-Ammonium-Salz einer Mercapto- und/oder Thio-Verbindung oder einem Alkyl-substituierten Derivat davon; und/oder
ii. einem kathodischen und anodischen Korrosionsschutzmittel; und/oder
iii. einem oder mehreren des Wirkstoffs
kleiner als die Grundierungsschicht eines Lacks sind.

4. Zusammensetzung nach Anspruch 3, wobei die Partikelgröße der Korrosionsschutzmittel nicht größer als 5 µm ist.

5. Zusammensetzung nach Anspruch 1, die im Wesentlichen frei von flüchtigen organischen Lösungsmitteln ist.

6. Zusammensetzung nach Anspruch 1, die im Wesentlichen frei von Chromat ist.

7. Zusammensetzung nach Anspruch 1, ferner umfassend einen Katalysator.

8. Zusammensetzung nach Anspruch 1, wobei das Härtungsmittel eine stickstoffhaltige Verbindung ist.

9. Zusammensetzung nach Anspruch 8, wobei die stickstoffhaltige Verbindung ein aus der Gruppe bestehend aus N-Phenyl-N'-(1,3-dimethylbutyl)-p-phenylendiamin; N-Phenyl-N'-cyclohexyl-p-phenylendiamin; gemischten Diaryl-p-phenylendiaminen; N,N'-Diphenyl-p-phenylendiamin; N,N'-Di-betanaphthyl-p-phenylendiamin; N, N'-Bis(1,4-dimethylpentyl)-p-phenylendiamin; N,N'-Bis(1-ethyl-3-methylpentyl)-p-phenylendiamin; N,N'-Bis(1-methylheptyl)-p-phenylendiamin; N-Phenyl-N'-p-toluolsulfonyl-p-phenylendiamin; N-Phenyl-N'-alkyl-p-phenylendiaminen; Dialkyl-p-phenylendiaminen; N,N'-Bis(1-cyclohexyl-1-ethyl)-p-phenylendiamin; N,N'-Di(sec-hexyl)-p-phenylendiamin; N-(1,3-Dimethylbutyl)-N'-(1,4-dimethylpentyl)-p-phenylendiamin; N-(sec-Hexyl)-N'-(sec-alkyl)-p-phenylendiaminen; N,N'-Di(1,4-dimethylpentyl)-p-phenylendiamin; 2,4,6-Tris(N-alkyl-p-phenylendiamino)-1,3,5-triazin; 6-Ethoxy-1,2-dihydro-2,2,4-trimethylchinolin; N-Phenyl-N'-isopropyl-p-phenylendiamin; N-Phenyl-N'-(1-methylheptyl)-p-phenylendiamin; und Kombinationen davon ausgewähltes Mitglied ist.

10. Zusammensetzung nach Anspruch 8, wobei die stickstoffhaltige Verbindung ein aus der Gruppe bestehend aus Bis(para-aminocyclohexyl)methan, 3,3'-Diaminodiphenylsulfon, 4,4'-Diaminodiphenylsulfon, Dicyandiamid, Diethyltoluoldiaminen und 4,4'-Methylenbis(cyclohexylamin) ausgewähltes Mitglied ist.

11. Zusammensetzung nach Anspruch 1, wobei die Grundierungszusammensetzung bei Umgebungstemperatur für einen Zeitraum von bis zu drei Monaten ohne Verlust der Fähigkeit, an einer Metalloberfläche aufgebracht zu werden, gelagert werden kann.

12. Zusammensetzung nach Anspruch 1, wobei die Grundierungszusammensetzung, wenn sie gehärtet ist, Beständigkeit gegen organische Lösungsmittel zeigt.

13. Zusammensetzung nach Anspruch 1, wobei die Grundierungszusammensetzung, wenn sie an Metalloberflächen aufgebracht ist, Korrosion verhindert und Oberflächen eine Langzeitbeständigkeit gegen Korrosion bereitstellt.

14. Grundiertes Substrat umfassend die Zusammensetzung nach Anspruch 1 und ein Substrat, wobei das Epoxidharz in Form eines Films vorhanden ist.

15. Grundiertes Substrat nach Anspruch 14, wobei das Substrat aus Metall konstruiert ist.

16. Verfahren zur Herstellung einer Grundierungszusammensetzung nach Anspruch 1, umfassend zumindest folgende Schritte:
a. Bereitstellen einer wärmehärtenden Harzzusammensetzung, die ein selbstemulgierendes Epoxidharz umfasst, das durch die Reaktion von (a) Epoxidharz, (b) mehrwertigem Phenol und (c) einem Amin-Epoxid-Addukt erhaltbar ist, wobei das Amin-Epoxid-Addukt ein Reaktionsprodukt eines aromatischen Polyepoxids mit einem Polyoxyalkylenamin ist;
b. Bereitstellen eines Korrosionsschutzmittels umfassend
i. eines oder mehrere von einem organischen Zinksalz, einem Alkyl-Ammonium-Salz oder Cycloalkyl-Ammonium-Salz einer Mercapto- und/oder Thio-Verbindung oder einem Alkyl-substituierten Derivat davon; und/oder
ii. die Kombination eines anodischen Korrosionsschutzmittels und eines kathodischen Korrosionsschutzmittels, vorausgesetzt, dass das anodische Korrosionsschutzmittel kein Chromat ist; und/oder
iii. einen oder mehrere von einem Wirkstoff, der aus der Gruppe von Korrosionsschutzverbindungen ausgewählt ist, die wasserlösliche Korrosionsschutzmittel, Kupferkomplexbildner oder Korrosionsschutzpigmente oder Pigmente, die Blei, Phosphate, Wolframat, Zirconat oder Eisen enthalten, und Kombinationen davon umfassen;
c. Bereitstellen von Wasser; und
d. Bereitstellen eines Härtungsmittels.

17. Geklebte Baugruppe umfassend zwei in Abstandsbeziehung ausgerichtete Substrate, welche jeweils eine nach innen gewandte Oberfläche und eine nach außen gewandte Oberfläche aufweisen, wobei zwischen den nach innen gewandten Oberflächen jedes der zwei Substrate eine durch die Grundierungszusammensetzung nach Anspruch 1 und einen gehärteten Klebstoff gebildete Klebeverbindung vorhanden ist.

18. Reaktionsprodukte der Zusammensetzung nach Anspruch 1.

19. Klebesystem umfassend:
a. eine Grundierungszusammensetzung nach Anspruch 1; und
b. einen Klebstoff.

20. Klebesystem nach Anspruch 19, wobei der Klebstoff in Form eines Films vorhanden ist.

21. Grundierungszusammensetzung nach Anspruch 1, wobei die Komponenten a., b. und d. in der Komponente c. in einer Menge von 10 bis ungefähr 60 Gewichtsprozent dispergiert sind.

## Revendications

1. Composition d'une couche de fond à base aqueuse, comprenant :
a. une composition de résine thermodurcissable comprenant une résine époxy auto-émulsifiante que l'on peut obtenir par la mise en réaction (a) d'une résine époxy, (b) d'un phénol polyvalent et (c) d'un adduit d'amine-époxy, l'adduit d'amine-époxy représentant le produit réactionnel d'un polyépoxyde aromatique avec une polyoxyalkylène-amine;
b. un inhibiteur de la corrosion;
c. de l'eau; et
d. un adjuvant du durcissement.

2. Composition selon la revendication 1, dans laquelle l'inhibiteur de la corrosion comprend :
i. un ou plusieurs éléments du groupe comprenant un sel de zinc organique, un sel d'alkyl-ammonium ou un sel de cycloalkyl-ammonium d'un composé mercapto et/ou d'un composé thio ou un de leurs dérivés substitués avec un ou plusieurs groupes alkyle; et/ou
ii. la combinaison d'un inhibiteur anodique de la corrosion et d'un inhibiteur cathodique de la corrosion, à condition que l'inhibiteur anodique de la corrosion ne représente pas un chromate ; et/ou
iii. un ou plusieurs ingrédients actifs choisis parmi le groupe des composés anticorrosion comprenant un inhibiteur de la corrosion soluble dans l'eau, des agents de complexation du cuivre ou des pigments anticorrosion ou bien des pigments contenant du plomb, des phosphates, du tungstate, du zirconate ou du fer, ainsi que leurs combinaisons.

3. Composition selon la revendication 2, dans laquelle la granulométrie desdits
i. un ou plusieurs éléments du groupe comprenant un sel de zinc organique, un sel d'alkyl-ammonium ou un sel de cycloalkyl-ammonium d'un composé mercapto et/ou d'un composé thio ou un de leurs dérivés substitués avec un ou plusieurs groupes alkyle ; et/ou
ii. inhibiteurs anodique et cathodique de la corrosion ; et/ou
iii. un ou plusieurs ingrédients actifs ;
est inférieure à celle de la couche de fond d'un revêtement.

4. Composition selon la revendication 3, dans laquelle la granulométrie des inhibiteurs de la corrosion n'est pas supérieure à 5 µm.

5. Composition selon la revendication 1, essentiellement exempte de solvants organiques volatils.

6. Composition selon la revendication 1, essentiellement exempte de chromate.

7. Composition selon la revendication 1, comprenant en outre un catalyseur.

8. Composition selon la revendication 1, dans laquelle l'adjuvant du durcissement est un composé azoté.

9. Composition selon la revendication 8, dans laquelle le composé azoté représente un membre choisi parmi le groupe constitué par la N-phényl-N'-(1,3-diméthylbutyl)-p-phénylènediamine ; la N-phényl-N'-cyclohexyl-p-phénylènediamine; des diaryl-p-phénylènediamines mixtes ; la N,N'-diphényl-p-phénylènediamine; la N,N'-di-bêta-naphtyl-p-phénylènediamine; la N,N'-bis(1,4-diméthylpentyl)-p-phénylènediamine; la N,N'-bis(1-éthyl-3-méthylpentyl)-p-phénylènediamine; la N,N'-bis(1-méthylheptyl)-p-phénylènediamine; la N-phényl-N'-p-toluènesulfonyl-p-phénylènediamine; les N-phényl-N'-alkyl-p-phénylènediamines; les dialkyl-p-phénylènediamines; la N,N'-bis(1-cyclohexyl-1-éthyl)-p-phénylènediamine; la N,N'-di(sec-hexyl)-p-phénylènediamine ; la N-(1,3-diméthylbutyl)-N'-(1,4-diméthylpentyl)-p-phénylènediamine; les N-(sec-hexyl)-N'-(sec-alkyl)-p-phénylènediamines; la N,N'-di(1,4-diméthlpentyl)-p-phénylènediamine; la 2,4,6-tris(N-alkyl-p-phénylènediamino)-1,3,5-triazine ; la 6-éthoxy-1,2-dihydro-2,2,4-triméthylquinoléine ; la N-phényl-N'-isopropyl-p-phénylènediamine; la N-phényl-N'-(1-méthylheptyl)-p-phénylènediamine ; et leurs combinaisons.

10. Composition selon la revendication 8, dans laquelle le composé azoté représente un membre choisi parmi le groupe constitué par le bis(para-amino-cyclohexyl)méthane, la 3,3'-diaminodiphénylsulfone, la 4,4'-diaminodiphénylsulfone, le dicyandiamide, des diéthyltoluylènediamines et la 4,4'-méthylènebis(cyclohexylamine).

11. Composition selon la revendication 1, dans laquelle la composition de couche de fond peut être entreposée à la température ambiante pendant un laps de temps s'élevant jusqu'à trois mois sans perdre sa capacité d'application sur une surface métallique.

12. Composition selon la revendication 1, dans laquelle, la composition de couche de fond, lorsqu'elle est durcie, manifeste une résistance aux solvants organiques.

13. Composition selon la revendication 1, dans laquelle la composition de couche de fond, lorsqu'elle est appliquée sur des surfaces métalliques, inhibe la corrosion et confère aux surfaces une résistance à long terme vis-à-vis de la corrosion.

14. Substrat muni d'une couche de fond comprenant la composition selon la revendication 1 et un substrat, dans lequel la résine époxy se présente sous la forme d'un film.

15. Substrat muni d'une couche de fond selon la revendication 14, dans lequel le substrat est réalisé en métal.

16. Procédé de préparation d'une composition de couche de fond selon la revendication 1, comprenant au moins les étapes dans lesquelles :
a. on procure une composition de résine thermodurcissable comprenant une résine époxy auto-émulsifiante que l'on peut obtenir par la mise en réaction (a) d'une résine époxy, (b) d'un phénol polyvalent et (c) d'un adduit d'amine-époxy, l'adduit d'amine-époxy représentant le produit réactionnel d'un polyépoxyde aromatique avec une polyoxyalkylène-amine ;
b. on procure un inhibiteur de la corrosion comprenant:
i. un ou plusieurs éléments du groupe comprenant un sel de zinc organique, un sel d'alkyl-ammonium ou un sel de cycloalkyl-ammonium d'un composé mercapto et/ou d'un composé thio ou un de leurs dérivés substitués avec un ou plusieurs groupes alkyle ; et/ou
ii. la combinaison d'un inhibiteur anodique de la corrosion et d'un inhibiteur cathodique de la corrosion, à condition que l'inhibiteur anodique de la corrosion ne représente pas un chromate ; et/ou
iii. un ou plusieurs ingrédients actifs choisis parmi le groupe des composés anticorrosion constitué par des inhibiteurs de la corrosion solubles dans l'eau, des agents de complexation du cuivre, des pigments anticorrosion ou des pigments contenant du plomb, des phosphates, du tungstate, du zirconate ou du fer, ainsi que leurs combinaisons.
c. on procure de l'eau; et
d. on procure un adjuvant du durcissement.

17. Assemblage collé comprenant deux substrats écartés et mis en alignement réciproque, chacun possédant une surface tournée vers l'intérieur et une surface tournée vers l'extérieur, une liaison formée par la composition de couche de fond selon la revendication 1 et par un adhésif durci étant disposée entre les surfaces tournées vers l'intérieur de chacun des deux substrats.

18. Produits réactionnels de la composition selon la revendication 1.

19. Système de collage comprenant :
a. une composition de couche de fond selon la revendication 1; et
b. un adhésif.

20. Système de collage selon la revendication 19, dans lequel l'adhésif se présente sous la forme d'un film.

21. Composition de couche de fond selon la revendication 1, dans laquelle les composants a., b., et d. sont dispersés dans le composant c. en une quantité de 10 à environ 60 % en poids.
